# NEUE EUROPÄISCHE PATENTSCHRIFT

(11) **EP 0 208 055 B2**
(45) Veröffentlichungstag und Bekanntmachung des Hinweises auf die Entscheidung über den Einspruch: **05.04.1995**
(45) Hinweis auf die Patenterteilung: 20.12.1989
(21) Anmeldenummer: 86103357.9
(22) Anmeldetag: 12.03.1986
(51) Int. Cl.: B29D 23/00, B29C 47/06, B29C 47/90

(54) **Vorrichtung zur Herstellung doppelwandiger Kunststoffrohre**
Apparatus for producing double-walled plastic pipes
Dispositif pour la fabrication de tuyaux à double paroi en plastique

(30) Priorität: 12.04.1985 DE 3513708
(43) Veröffentlichungstag der Anmeldung: 14.01.1987
(73) Patentinhaber: Drossbach GmbH & Co. KG, D-86641 Rain (DE)
(72) Erfinder: Drossbach, Hubert M., Dipl.-Ing., D-8852 Rain am Lech (DE)
(74) Vertreter: Lorenz, Eduard

(56) Entgegenhaltungen:
- EP-A- 0 135 634
- EP-A- 0 142 482
- DE-A- 1 704 718
- DE-A- 2 911 833
- DE-A- 3 245 084
- DE-B- 2 413 878
- DE-C- 1 039 244
- GB-A- 994 567
- US-A- 3 994 646
- US-A- 4 226 580
- US-A- 4 510 013
- "Berechnen von Extrudierwerkzeugeen", VDI-Verlag, 1978
- "Messen und Regeln beim Extrudieren", VDI-Verlag, 1982

## Beschreibung

Die Erfindung betrifft eine Vorrichtung zur Herstellung doppelwandiger Kunststoffrohre nach dem Oberbegriff des Patentanspruchs 1.

Es ist seit langem bekannt, doppelwandige Rohre aus thermoplastischem Polymermaterial herzustellen, bei denen die äußere Wand des Rohrs im wesentlichen quergewellt und die innere Wand glatt und ungewellt ist, wobei die innere und die äußere Wand an den inneren Wellenbäuchen der äußeren Wand zusammengefügt sind. Rohre dieser Art werden durch gleichzeitiges Extrudieren eines inneren und eines äußeren Schlauches hergestellt, indem der äußere Schlauch im plastischen Stadium gegen eine umgebende Form, die sich mit dem extrudierten äußeren Schlauch bewegt, geblasen wird, wobei der äußere Schlauch gewellt wird und anschließend der innere Schlauch gegen die inneren Wellenbäuche des äußeren Schlauches gedrückt wird, während das Material von beiden Röhren sich noch im plastischen Stadium befindet.

Bei der Verwendung von Polyäthylen führen diese bekannten Verfahren und Einrichtungen zu ganz brauchbaren Ergebnissen. Derartige doppelwandigen Rohre aus Polyäthylen sind bekannte Handelsartikel geworden. Obwohl jedoch umfangreiche Versuche getätigt wurden, konnte nur ein geringer kommerzieller Erfolg erreicht werden, solche doppelwandigen Rohre aus Polyvinylchlorid herzustellen, trotz der Tatsache, daß Polyvinylchlorid bekannterweise hervorragende Eigenschaften besitzt, die es ermöglichen würden, solche doppelwandigen Rohre für Einsatzzwecke zu verwenden, die besondere Eigenschaften erfordern, wie z. B. die Verwendung als Kanalisationsrohr. In fast allen Fällen, in denen PVC-Rohre nach dem Stand der Technik hergestellt wurden, zeigte sich eine beträchtliche Sprödigkeit, eine ungeeignete Verbindung zwischen den zwei Wänden oder beides.

Die Gründe für die beim Stand der Technik aufgetretenen Schwierigkeiten sind nicht völlig klar. Ein bedeutender Faktor ist darin begründet, daß Polyäthylen, das im Stand der Technik erfolgreich verwendet wurde, Hitze weniger schnell abgibt als Polyvinylchlorid, so daß es bei der Verwendung von Polyäthylen gemäß dem Stand der Technik möglich war, den inneren Schlauch bei einer Temperatur mit den Wellenbäuchen des äußeren Schlauches in Verbindung zu bringen, die für beide Schläuche für eine gute Verbindung ausreichend war. Dies war jedoch nicht bei der Verwendung von Polyvinylchlorid möglich. Es ist weiterhin wahrscheinlich, daß das Fließmuster, dem das Plastikmaterial ausgesetzt war, um eine Verbindung zwischen den zwei Wänden zu erreichen, zu einem zwangsweisen Scherfluß führte, der bei Verwendung eines Polymers wie Polyvinylchlorid eine beträchtliche Sprödigkeit hervorrief.

Unabhängig von den Gründen der Schwierigkeiten im Stand der Technik bestand ein ständiger Bedarf für zweiwandige Rohre aus Polyvinylchlorid mit technischen Eigenschaften, die erforderlich sind, wenn das Rohr als Abflußrohr oder für ähnliche Zwecke eingesetzt wird.

Aus der DE-A 2 911 833 ist eine Vorrichtung zur Herstellung von PVC-Doppelwandrohren mit im wesentlichen glatter Innenwand und quergewellter Außenwand bekannt, bei dem ein aus einem einzigen Extruder gerade in einen Extrusionskopf eingeführter Kunststoffstrom in zwei konzentrische Kunststoffströme geteilt wird, die nach Austritt aus konzentrischen Düsenöffnungen an einer Form- und Kühlanordnung miteinander verbunden werden. Der Kunststoffstrom wird an einer Spitze schlauchförmig aufgeteilt, durchläuft dann den Dornhalter mit den Stegen und wird stromabwärts hinter den Stegen durch ein Zwischenrohr, das durch weitere Stege am Außendorn gehalten ist, in zwei konzentrische Kunststoffströme aufgeteilt.

Bei dem aus DE-A 2911 833 bekannten Spritzkopf wird der von dem Extruder zugeführte Kunststoff-Schmelzestrang bis zu seinem Austritt aus den beiden konzentrischen Düsenspalten insgesamt viermal geteilt, nämlich einmal durch die Spitze des Dorns in einen rohrförmigen Schmelzestrom und durch die Ringschneide des Zwischenrohrs in zwei konzentrische, rohrförmige Schmelzeströme, und zum anderen durch das Stegteil des Dornträgers und durch das Stegteil des Zwischenrohrhalters, wobei sich die Trennung der rohrförmigen Schmelzeströme aufeinanderfolgend durch die Stegteile des Dornträgers und des Zwischenrohrhalters besonders störend bemerkbar machen, weil die Schmelzeströme nach der Trennung durch diese wieder zusammengeführt werden.

Aufgabe der Erfindung ist es, eine Vorrichtung nach dem Oberbegriff des Patentanspruchs 1 zu schaffen, die eine einwandfreie Herstellung von Doppelwand-PVC-Rohren ermöglicht, konstruktiv einfach aufgebaut ist und bei der Kunststoffstrom auf seinem Weg zu den Düsenöffnungen so gering wie möglich beeinflußt wird.

Erfindungsgemäß wird diese Aufgabe durch die kennzeichnenden Merkmale des Patentanspruchs 1 gelöst.

Dadurch, daß nur ein einziger Teiler vorgesehen ist, der sowohl den inneren Dorn als auch den Separierzylinder trägt, werden die beiden konzentrischen, rohrförmigen Schmelzeströme jeweils nur einmal durch die den Separierzylinder und den inneren Dorn tragenden Stege des Teilers gestört. Diese Störung kann ohne Nachteile für das Endprodukt in Kauf genommen werden, weil der sowohl den inneren Dorn als auch den Separierzylinder tragende Teiler im Bereich der durch einen konischen Torpedo gebildeten Spitze des Dorns angeordnet ist, so daß von dem Teiler bis zu den Düsenöffnungen eine ausreichend lange, unterbrechungsfreie Führung der konzentrischen Schmelzeströme vorgesehen werden kann, die eine Homogenisierung und damit die Beseitigung der Schereinflüsse in der Schmelze zur Folge hat.

Vorteilhafte Ausgestaltungen der Erfindung sind Gegenstand der Ansprüche 2 bis 8.

In einem nachfolgenden Ausführungsbeispiel wird die Erfindung näher verdeutlicht. Es zeigen
Fig. 1 eine schematische Seitenanschicht eines Extruders, des Extrusionskopfes und der wandernden Form zur Ausführung des Verfahrens,
Fig. 2 eine Seitenansicht einer vergrößerten Ansicht von Fig. 1 des Extrusionskopfes im Querschnitt,
Fig. 3 einen Längsschnitt des Kühldorns,
Fig. 3A eine vergrößerte Ansicht ähnlich wie Fig. 3, zur Erläuterung der Extrusion und der Formung der beiden Schläuche,
Fig. 3B eine Ansicht, teils im Längschnitt, teils in Seitenansicht, zur Verdeutlichung einiger Größenbeziehungen,
Fig. 3C eine Teilansicht einer Abstandsscheibe zur Ermöglichung des Gaszuflusses in das Innere des inneren Schlauches,
Fig. 3D einen Längsschnitt zur Darstellung der Anordnung des Form- und Kühldorns an der Spritzform,
Fig. 4 eine Teilansicht in Längsrichtung eines doppelwandigen Rohres, das mit einer Einrichtung nach den Fig. 1 bis 3 gemäß der Erfindung hergestellt ist,
Fig. 5 eine teilweise Längsansicht, die im Hinblick auf Fig. 4 vergrößert ist, aufgenommen entlang der Linie 5-5 von Fig. 4,
Fig. 6 ein Schliffbild im wesentlichen entlang der Linie 5-5 von Fig. 4.

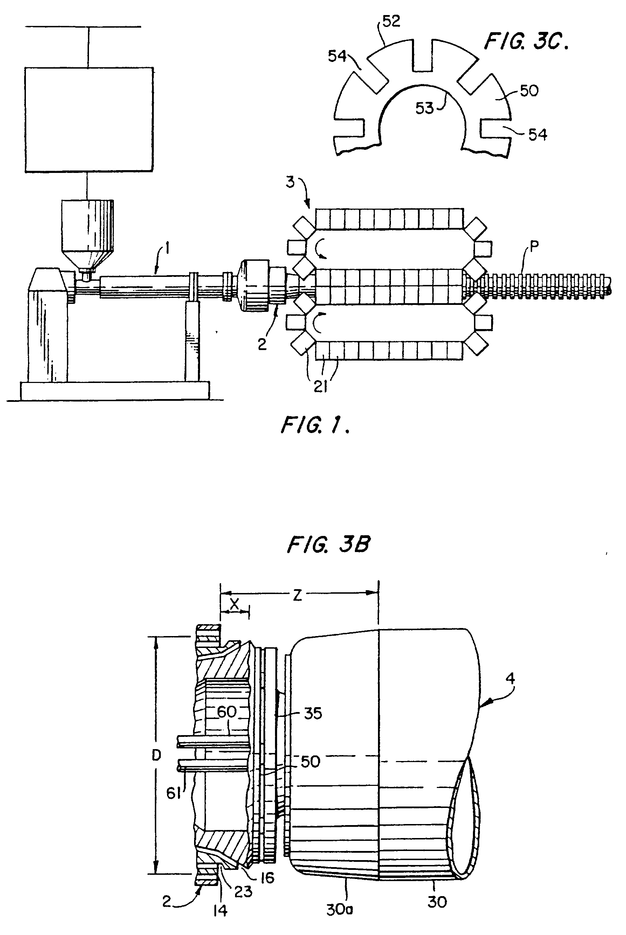

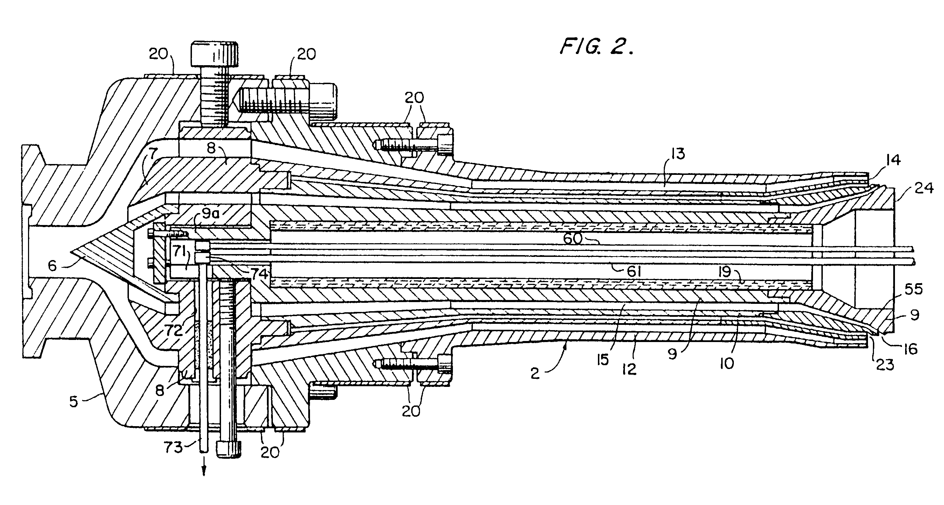

Zum besseren Verständnis wird das Verfahren im folgenden im Hinblick auf die Figuren 1 bis 3D näher erläutert. Das zu extrudierende Polymer wird als frei fließende Trockenmischung hergestellt, vorzugsweise durch einen Hochleistungs-Zentrifugalmischer. Die Mischung wird kontinuierlich dem Einfülltrichter eines konventionellen Schraubenextruders 1 mit einer Spritzform 2, einer wandernden Form 3 und einem gestreckten Form- und Kühldorn 4 zugeführt. Der Extruder ist konventionell mit einer elektrischen Widerstandsheizung bestückt, wobei die Betätigung der Extruderschnecke und der Heizeinrichtungen die gewünschte Schmelztemperatur erbringen.

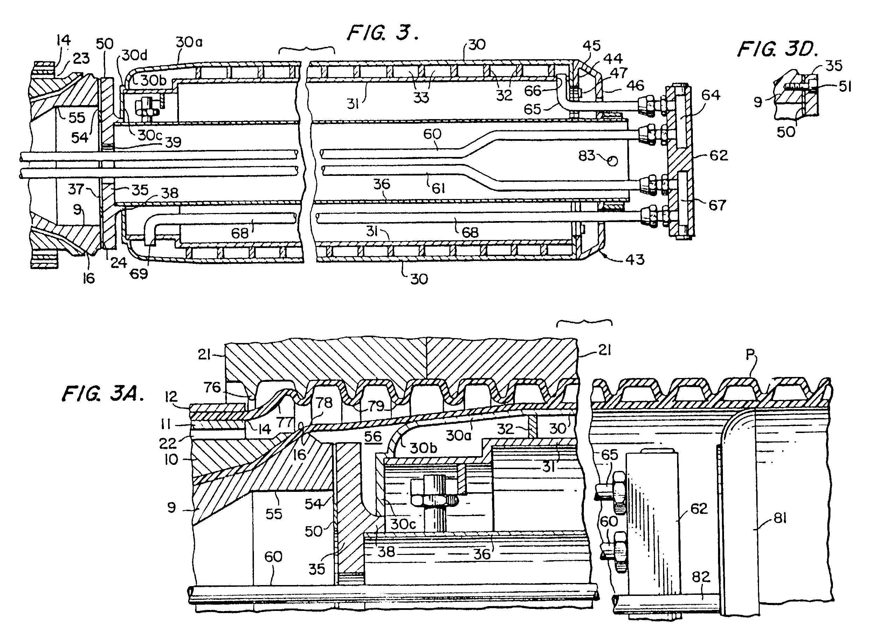

Wie in Fig. 2 zu sehen ist, enthält die Düse 2 einen Düsenkörper 5, der zwei flußleitende Torpedos 6 und 7 aufweist, die im wesentlichen konisch sind, sich zum Auslaßende des Extruderzylinders verjüngen und durch einen doppelten Teller 8 getragen werden. Die Spritzform enthält weiter einen röhrenförmigen inneren Dorn 9, einen röhrenförmigen Separierzylinder 10, der den Dorn 9 umgibt und damit konzentrisch liegt, und einen äußeren Zylinder 12, der den Dorn 11 konzentrisch umgibt. Dorn 11 und Zylinder 12 sind zur Festlegung eines ersten Durchlasses 13, der vom äußeren Torpedo 7 zur ersten ringförmigen Düse 14 führt, radial voneinander getrennt. Dorn 9 und Separierzylinder 10 sind zur Festlegung eines zweiten Durchlasses 15, der vom inneren Torpedo 6 zu einer zweiten ringförmigen Düsenöffnung 16 führt, radial voneinander getrennt. Die Düse 16 ist kleiner als die Düse 14 und liegt damit konzentrisch. Die Düse 16 ist von der Düse 14 gemäß Fig. 3B in Extrusionsrichtung durch einen Abstand X entfernt, der Null sein kann, jedoch einen solchen Wert nicht überschreitet, daß das Verhältnis des Abstandes X zum inneren Durchmesser der Düse 14 etwa 1: 4 ist, wobei der Abstand X vorzugsweise einen solchen Wert aufweist, daß das Verhältnis im Bereich von 1: 8 bis 1:22 liegt.

Der äußere Torpedo 7 und das äußere Teil des Teilers 8 leiten einen Teil des gesamten Schmelzflusses von dem Extruderzylinder in einem ringförmigen Fluß, der nach vorne durch den Durchlaß 13 zur Düsenöffnung 14 gedrückt wird. Die Oberflächen der Torpedos und des äußeren Teils des Teilers ergeben einen gleichmäßigen Übergangsweg vom Ausgang des Extruders zum Anfang des Durchlasses 13. Der Durchlaß 13 weist dann gerade Wände auf und ist nur leicht kegelig, so daß die Möglichkeit von begrenztem Scheren oder Rollen des Polymermaterials vermieden wird. Die Düsenlippen, die die Öffnung 14 darstellen, weisen kreiszylindrische Oberflächen auf, die quer zur Längachse der Düse damit konzentrisch und in gleicher Ebene liegen. Das geschmolzene aus der Düse 14 ausgetretene Plastik ist daher in der Form einer zylindrischen Röhre ausgebildet. Die Oberflächen, die durch die Torpedos und den inneren Teil des Verteilers gebildet sind, bestimmen ebenfalls einen gleichmäßigen Übergangsweg vom Hals des Extruderzylinders zum Durchlaß 15. Obwohl der Durchlaß 15 in Vorwärtsrichtung in radialem Querschnitt leicht kegelig ist, ist er im wesentlichen gerade bis nahe an den Ort der Mündungen. An dieser Stelle erweitert sich der Durchlaß 15 in konischer Weise nach außen und vorwärts. Die Düsenlippen der Mündung 16 sind Fortsetzungen der konischen Wände des vorderen Endes des Durchlasses 15, so daß das geschmolzene aus der Düse 16 austretende Plastik sowohl nach außen als auch vorwärts gerichtet wird.

Der innere Dorn 9 enthält ein Zuflußrohr 17, durch das Kühlflüssigkeit zum Form- und Kühldorn 4 geleitet wird, ein Auslaßrohr 18, das die Kühlflüssigkeit von dem Dorn 4 ableitet, und ein inneres Hitzeband 19, um Hitze von innen an die Form zu führen. Äußere Hitzebänder 20 sind am äußeren Zylinder der Form, dem Formenkörper und neben dem Adapterflansch vorgesehen, durch den die Form am Extruderzylinder befestigt ist.

Zur Bildung von Wellen auf einer extrudierten Plastikröhre kann die wandernde Form von gewöhnlicher Art sein und ist vorzugsweise in Form von zwei Sätzen von Halbformen 21 ausgebildet, wobei jedes Paar von Halbformen um das extrudierte Rohr gelegt werden kann. Die Sätze von Halbformen werden von einem endlosen Träger getragen, so daß jedes Paar von Halbformen geschlossen und in diesem Zustand in Extrusionsrichtung in einem Maß bewegt werden kann, das vom Extrusionsmaß abhängt. Derartige wandernde Formen sind z.B. in der US-PS 3 280 430 beschrieben.

Der Raum zwischen dem Formzylinder 10 und dem Dorn 11 bildet einen Gasdurchlaß 22, dem komprimierte Luft oder ein anderes geeignetes Gas über einen nicht dargestellten Anschluß innerhalb des Formenkörpers zugeführt wird, und der in Vorwärtsrichtung zu einer ringförmigen Auslaßöffnung 23 führt, die kleiner ist als die erste Düse 14 und von dieser nach innen mit Abstand angeordnet ist, so daß diese zwischen den Düsen 14 und 16 liegt. Der innere Querschnitt des innersten Formendorns 9 ist größer als erforderlich, um die Zufluß- und Abflußröhren für die Kühlflüssigkeit aufzunehmen, so daß die Bohrung des Dorns 9 ebenfalls ein komprimiertes Gas über nicht dargestellte Anschlüsse innerhalb des Formenkörpers überleiten kann.

Der Form- und Kühldorn ist, wie in Fig. 3 zu sehen ist, eine im wesentlichen röhrenförmige Einheit, die eine äußere Wand 30 und eine innere mit der äußeren Wand 30 konzentrische Wand 31 aufweist. Die beiden Wände sind voneinander durch eine schraubenförmige Zwischenwand 32 getrennt, die an den Seiten mit den entsprechenden Wänden 30, 31 Flüssigkeitsdicht verbunden ist, so daß die Zwischenwand 32 einen schraubenförmigen Kanal 33 bildet. Über den größten Teil seiner Länge bildet die äußere Wand 30 eine kreiszylindrische äußere Oberfläche. An der linken Seite gemäß den Fig. 3 - 3B weist die äußere Wand 30 jedoch ein Teil 30A auf, das sich nach innen in einem flachen Winkel in kegelstumpfartiger Anordnung erstreckt, und das an einem Endteil 30B endet, das sich glatt nach innen richtet und in ein flaches quergerichtetes ringförmiges Endteil 30C übergeht, das vom Teil 30B durch einen kurzen axial sich erstreckenden ringförmigen Bereich 30D entfernt ist.

Der Dorn 4 weist weiterhin eine Montageplatte 35 und ein zentrales Rohr 36 auf. Eine Seite 37 der Platte 35 ist über die gesamte kreisförmige Platte flach ausgebildet. Die entgegengesetzte Seite der Platte 35 weist einen ringförmigen Ansatz 38 auf, der konzentrisch mit der äußeren kreisförmigen peripheren Kante der Platte liegt und der zum Umfassen des einen Endes der Röhre 36 einen entsprechenden inneren Durchmesser aufweist, so daß dieses Ende der Röhre 36 fest mit dem Ansatz verbunden ist. Der innere Umfang des Endwandteils 30C des Teils 30 umfaßt den äußeren Umfang des Ansatzes 38 und ist fest damit verbunden. Wie am besten aus Fig. 3A ersichtlich ist, weist der äußere Umfang der Platte 35 einen Durchmesser auf, der ersichtlich kleiner ist als der Durchmesser der Extrusionsöffnung 16. Die Platte 35 enthält eine zentrale axiale Bohrung 39. Am gegenüberliegenden Ende entgegengesetzt zur Platte 35 weist die äußere Wand 30 einen quer stehenden ringförmigen nach innen gerichteten Endflansch 42 auf, an dem das entsprechende Ende der inneren Wand 31 flüssigkeitsdicht befestigt ist. An der äußeren Oberfläche des Flansches 42 ist ein Endteil 43 mit einer flachen quergerichteten ringförmigen Endwand 44, einer kegelstumpfförmige äußere Wand 45, die vom Dorn weg nach innen gerichtet ist, und einer flachen quergerichteten ringförmigen Endwand 46 befestigt, die eine zentrale Öffnung aufweist, durch die sich das entsprechende Endteil der Röhre 36 erstreckt, wobei der innere Umfang der Wand 46 flüssigdicht an der Röhre 36 befestigt ist. Das Teil 43 ist fest am Flansch 42 angebracht, z.B. durch umlaufend in Abstand angeordnete Halter 47.

Eine Abstandsscheibe 50 überdeckt die Seite 37 der Montageplatte 35. Die Montageplatte und damit der Dorn 4 ist über die Schrauben 51 gemäß Fig. 3D fest mit dem Beginn des Dorns 9 verbunden, wobei die Scheibe 50 zwischen den Flächen 24 und 37 eingeklemmt ist. Wie Fig. 3 zeigt, ist Scheibe 50 ringförmig ausgebildet und weist eine kreisförmige äußere Oberfläche 52 und eine kreisförmige innere Oberfläche 53 auf. Eine Vielzahl von rechteckförmigen Nuten 54 erstrecken sich radial in Hinblick auf die Platte und öffnen sich nach außen durch die äußere Peripherie 52. Wie am besten in Fig. 3A zu sehen ist, ist die radiale Länge der Nuten 54 derart gewählt, daß in der endgültigen Anordnung die inneren Enden der Nuten von der inneren Oberfläche 55 der Spitze des Dorns 9 einen Abstand nach innen aufweisen. Auf diese Weise kann Luft oder ein anderes Gas, das unter Druck zur Bohrung des inneren Dorns der Form 2 geführt ist, nicht nur zum Inneren der Röhre 36 des Dorns 4, sondern ebenfalls über die Nuten 54 zum ringförmigen Raum 56 in gemäß 3A zwischen der Spitze der Form und dem zugehörigen Ende des Dorns 4 geleitet werden.

Ein Zuflußrohr 60 und ein Abflußrohr 61 erstrecken sich durch die Bohrung des Dorns 4, durch die zentralen Öffnungen in den Platten 35 und 50, insgesamt durch die Röhre 36 des Dorns 4 und sind außerhalb des Endes der Röhre 36 mit einem Verteiler 62 gemäß Fig. 3 verbunden. Das Rohr 60 steht mit einem Ende an der Leitung 64 des Verteilers in Verbindung, während das andere Ende des Leiters 64 mit einem Ende des Rohrs 65 verbunden ist, das sich durch Öffnungen in den Wänden 46 und 44 des Teils 43 erstreckt und dessen anderes Ende nach außen gebogen ist und innerhalb einer radialen Öffnung 66 in der Wand 31 abgedichtet ist, um mit einem Ende des Kanals 33 in der Nähe des Verteilers in Verbindung zu stehen. Das Rohr 61 ist mit einem Ende der Leitung 67 des Verteilers 62 verbunden, wobei das andere Ende der Leitung 67 mit einem Ende des Rohrs 68 in Verbindung steht, dessen anderes Ende nach außen gebogen ist und in einer Öffnung 69 der Wand 31 eingesetzt ist, um mit dem Ende des schraubenförmigen Kanals 33 nahe der Düse in Verbindung zu stehen. Die Röhren 60, 61, 65 und 68 sind fest und selbsttragend, und der Verteiler 62 wird völlig durch diese Röhren getragen.

Wie in Fig. 2 dargestellt ist, weist der Verteiler 8 der Spritzform 2 eine zentrale Bohrung auf, die einen Ansatz 9A des inneren Spritzraumkerns 9 aufnimmt. Der Ansatz ist hohl und enthält zwei radiale Schlitze, von denen einer mit der Ziffer 71 dargestellt ist. Für jede der Röhren 60 und 61 enthält der Verteiler eine radiale Bohrung 72, in der eine Röhre befestigt ist, die mit einer der Röhren 60 bzw. 61 in Verbindung steht. So erstreckt sich eine Röhre 73 durch eine Bohrung 72 und ist mit dem Ende des Rohrs 61 über ein Fitting 74 verbunden, um Kühlflüssigkeit von der Röhre 61 zu einem Ort außerhalb der Spritzform zu leiten. Eine zweite nicht dargestellte Röhre ist ähnlich mit dem Ende des Rohrs 60 verbunden, um Kühlflüssigkeit von einer externen Quelle zur Spritzformröhre 60 zu leiten. Ein drittes nicht dargestelltes Rohr ist mit der Bohrung des Einsatzes 9A verbunden, um Gas unter Druck über die Bohrung des Dorns 9 zu den Nuten 54 und zum Inneren der Röhre 36 des Dorns 4 zu leiten. Alle drei Röhren sind flüssigdicht zu den umgebenden Wänden der entsprechenden Bohrung 73 angeordnet.

Da der Dorn 4 fest mit der Düsenform 2 verbunden ist, und da der Dorn selbst eine feste Einheit bildet, wird der Dorn koaxial im Hinblick auf die Längsachse der Spritzform 2 gehalten. Der äußere Durchmesser der äußeren Wand 30 des Dorns 4 ist zum inneren Durchmesser der Wellenbäuche 76 der Wellen der Formhälften 21 in einem Abstand angeordnet, der im wesentlichen gleich der vereinigten Dicke der Wände der Schläuche 77 und 78, die aus den Düsenöffnungen 14 und 16 extrudiert werden. Bei Betrachtung der Fig. 3A wird verständlich, daß die inneren Rücken 76 der Formhälften, wenn die Formhälften sich über der Preßform in der Art nach Fig. 1 geschlossen haben, in einer gemeinsamen kreiszylindrischen Ebene liegen und daß diese zylindrische Ebene konzentrisch und mit Abstand nach außen von dem kreiszylindrischen Teil der äußeren Oberfläche der äußeren Wand des Dorns liegt. Im Betrieb wird Luft oder ein anderes Gas unter Druck über die Düsen 23 und über die Nuten 54 gleichzeitig mit der Extrusion des Polymermaterials über die Düsen 14 und 16 zugeführt. Sobald der äußere Schlauch 77 aus der Düsenöffnung 14 austritt, bläst das Gas aus der Öffnung 23 schnell den äußeren Schlauch in die wellenförmige Oberfläche der Hälften 21. Der innere Schlauch 78 kommt nach Austreten aus der Düsenöffnung 16 zunächst in Umfangseingriff mit dem abgerundeten Anfangsteil 30B der äußeren Wand 30 des Kerns 40 und wandert weiter entlang dem kegeligen Teil 30A der äußeren Dornwand.

Das aus den radialen Schlitzen, die durch die Nuten 54 der Platte 50 und der Seiten 24 und 37 gebildet sind, austretende Preßgas ergibt einen Druck im Raum 56, der ausreicht, um eine ungewollte Ablenkung des Schlauches 78 durch das Preßgas zwischendden Schläuchen 77 und 78 zu verhindern. Im Laufe des fortgesetzten Extrudierens der zwei Schläuche wandert der schlauch 78 über das ansteigende Oberflächenteil 30A zur Stelle, an der das Oberflächenteil 30A in die kreiszylindrische äußere Oberfläche der Wand 30 übergeht. An dieser Stelle hat die formende Funktion des Dorns 4 dazu geführt, den Schlauch 78 an eine Stelle zu bringen, an der er unmittelbar mit einem der ankommenden Wandrücken 79 des nun gewellten äußeren Schlauches 77 in Verbindung tritt, wobei die Formhälften 21 entlang dem Dorn mit der Extrusionsrate bewegt werden, wobei die Wellen 79 mit dem Fortschreiten der Formhälften mitwandern.

Wie in Fig. 3B dargestellt ist, ist die innere Düsenöffnung 16 von der äußeren Düsenöffnung 14 in Extrusionsrichtung in einem kleinen Abstand X entfernt. Der Wert des Abstandes ist auf jeden Fall geringer als 64 mm und vorzugsweise derart gewählt, daß das Verhältnis des Abstandes X zum inneren Durchmesser D der äußeren Extrusionsdüse, welche im wesentlichen dem Durchmesser des Rohres entspricht, innerhalb eines Bereiches von 1:4 bis 1:22, wobei die Werte für X derart gewählt sind, daß das Verhältnis vorzugsweise im Bereich zwischen 1:8 bis 1:22 liegt. Die Stelle, an der das Oberflächenteil 30A in die kreiszylindrische hauptsächlich äußere Oberfläche der Wand 30 des Dorns 4 übergeht, ist von der äußeren Düsenöffnung 14 in Extrusionsrichtung in einem Abstand Z entfernt. Aus Fig. 3B wird daher deutlich,' daß die Stelle, an der der innere extrudierte Schlauch 78 mit den inneren Wellenbäuchen 79 des gewellten äußeren Schlauches zusammentrifft, ebenfalls von der Düsenöffnung 14 in einem Abstand Z entfernt ist. Vorzugsweise ist der Wert des Abstandes Z nicht größer als die Strekke D. Wenn Rohre größeren Durchmessers hergestellt werden, ist der Abstand Z vorzugsweise geringer als der Radius des herzustellenden Rohres, d.h., geringer als die Hälfte des Abstandes D. Letztlich ist daher der Abstand Z die Grenze der axialen Bewegung des Schlauches 78, bevor die Schläuche 77 und 78 durch Zusammenwirken des Form- und Kühldorns und der wandernden Formenanordnung zusammengefügt werden, um die Verbindung zwischen dem inneren Schlauch und den inneren Rücken der Wellen des äußeren Schlauches hervorzubringen. Wenn die Temperaturen der Schmelze und des extrudierten Materials an den Düsenlippen wie beschrieben gesteuert werden, sichern die beschriebenen Größenverhältnisse, daß die Temperaturen der Schläuche 77 und 78 annähernd die gleichen sind und auf einem Wert gehalten sind, der eine gute Verbindung zwischen den zwei Schläuchen bewirkt, wenn der innere Schlauch in Verbindung mit den inneren Wellen 79 des äußeren Schlauches tritt.

Sobald die zwei Schläuche zusammengefügt sind, wandert das resultierende doppelwandige Rohr P unter der Wirkung der wandernden Formen 3 vorwärts. So überschreitet das Rohr die gesamte zylindrische äußere Oberfläche der Wand 3 des Dorns 4 und wird dabei durch die Kühlflüssigkeit, die durch den schraubenförmigen Kann 33 im Gegenstrom zur Bewegung des Rohres fließt, gekühlt. Die Kühlung des Dorns verringert die Temperatur des Rohrs soweit, daß das Polymermaterial des Rohrs völlig verfestigt und das Rohr selbständig wird.

Da die Zufuhr von Preßgas zum Raum 56 über die Nuten 54 erfordert, daß das Gas nicht in der Lage ist, frei durch das Rohr 36 des Dorns in den Innenraum des Rohrs P zu treten, wenn das Rohr abgezogen wird, ist gemäß Fig. 3A eine Abstreifdichtung 81, die von Armen 82 gehaltenwwird, vorgesehen, deren innere Enden z.B. in diagonal gegenüberliegende Öffnungen 83 des überstehenden Endteils des Rohrs 36 eingreifen. Die Abstreifdichtung 81 ist kreisförmig und gleitet dichtend über die innere Oberfläche des Rohrs P, wenn das Rohr von dem Dorn abtritt.

Zur Ausführung des Verfahrens mit einer Einrichtung nach den Fig. 1 - 3 wird eine intensive freifließende Trockenmischung vorbereitet, die folgende Zusammensetzung aufweist:

| Bestandteile | Gewichtsprozente |
|---|---|
| Polyvinylchlorid | 85-93,5 |
| Kalziumkarbonat | 1,5-10,0 |
| Polymerverarbeitungshilfe | 1,5-5,0 |
| Chloriertes Polyäthylen als Modifikator | 1,0-7,0 |
| Petroleumwachs | 1,0-3,0 |
| Titandioxid | 0,5-3,0 |
| Kalziumstearat | 0,25-0,5 |
| Rußpigment | 0,2-0,5 |
| Antimonstabilisator | 0,2-0,5 |
| Polyäthylenwachs | 0,1-0,2 |

Die Trockenmischung wird kontinuierlich zum Einfülltrichter des Extruders geleitet und der Extruder derart betrieben, daß eine Schmelztemperatur von 182 - 216° C am Zylinderausgang eingehalten wird. Die Hitzebänder an der Form erhalten die Formtemperaturen nahe der Schmelztemperatur und halten die Temperatur des extrudierten Materials an den Formlippen auf 193,3 ± 5,56° C. Sobald die Extrusion beginnt, wird Gas unter Druck durch den Durchlaß 22 und die Düse 23 bei einem Druck von 5-11 psi (0,35 - 0,77 kg/cm²) zugeführt, um den äußeren extrudierten Schlauch gegen die wandernden Formhälften 21 und in dessen Wellenräume aufzublasen. Gleichzeitig wird Luft unter Druck durch den inneren Formdorn 9 bei 5-9 psi (0,35 - 0,63 kg/cm²) zugeführt, um den inneren extrudierten Schlauch aufzublasen und dem Gasdruck zwischen den zwei Schläuchen entgegenzuwirken, so daß der innere extrudierte Schlauch über das kegelige Ende des Dorns 4 gelangen kann. Die Kühlflüssigkeit wird über die Zuflußleitung 60 bei einer Temperatur von typisch - 7 bis 16° C und einer Durchflußgeschwindigkeit von etwa 5 gal./min. (23 l/min.) bei einem Druck von 80 psi (etwa 5,6 kg/cm²) zum Dorn geführt. Da der Abstand X zwischen den zwei Düsenöffnungen klein ist, und die Schmelzen- und Lippentemperaturen wie angegeben gesteuert werden, befinden sich die extrudierten Schläuche, die aus den beiden Öffnungen austreten, auf einer Temperatur, die geeignet ist, eine gegenseitige thermische Fusion der zwei Schläuche zu bewirken.

Die Temperaturen der beiden Schläuche werden beide in einem Bereich guter Verbindung gehalten, da das gesamte aufblasende Druckgas durch die erhitzte Formenstruktur geleitet ist und daher auf einer Temperatur gehalten ist, die ausreichend hoch ist, das Plastik nicht zu weit abzukühlen und weil der Abstand Z wie dargestellt sehr klein ist. Da der Dorn 4 und die wandernden Formen zum Zusammenbringen des inneren extrudierten Schlauches mit den inneren Rücken der Wellen des äußeren Schlauches zusammenwirken, ergeben sich gute Verbindungsresultate. Da die Plastikschmelze, die vom Extruderzylinder durch die Formenanordnung geführt wird, weder auf Eigen-Rollen noch auf Scherung beansprucht ist, zeigt das feste doppelwandige Polyvinylchloridrohr, das durch die Kühlung auf der Hauptlänge des Dorns 4 abgekühlt ist, keine bedeutende Sprödigkeit infolge von Polymerdegradation.

Wenn die ursprüngliche Trockenmischung innerhalb der allgemeinen Zusammensetzung, wie oben angegeben ist, liegt, und wenn die Verfahrenstemperaturen wie dargestellt eingestellt werden, werden mit der Einrichtung nach den Fig. 3 und 3B und folgenden Maßangaben gute doppelwandige Rohre aus Polyvinylchlorid hergestellt.

| Rohrdurchmesser | Abstand X | Abstand Z |
|---|---|---|
| 100 mm | 5 mm | 49 mm |
| 100 mm | 20 mm | 77 mm |
| 150 mm | 7 mm | 33 mm |
| 150 mm | 14 mm | 33 mm |
| 200 mm | 11 mm | 74 mm |
| 200 mm | 24 mm | 74 mm |

Geeignete Polyvinylchloride für die Erfindung sind Homopolymere eines Molekulargewichts, die einen K-Wert von 60-70 aufweisen, vorzugsweise 62,5 - 67 (K-Wert nach Fikentscher). Es ist wenigstens ein Schlag-Modifikator enthalten, der vor zugsweise aus einer der folgenden Gruppen ausgewählt ist: Acrylpolymere und -copolymere, Acrylnitril-Butadien-Styrolcopolymere, Polyalphamethylstyrol und chlorierte Polyäthylene. Chlorierte Polyäthylene sind besonders vorteilhaft, und werden bei ihrer Verwendung mit wenigstens 1 Gewichtsprozent bezogen auf den gesamten Ansatz, darin eingefügt. Es wird vorzugsweise ein Gleitmittel vom Wachstyp eingesetzt und vorzugsweise werden sowohl Paraffinwachs als auch kleinere Anteile von Polyäthylenwachs, sowie Kalziumstearat als zusätzliches Gleitmittel verwendet.

### Beispiel 1

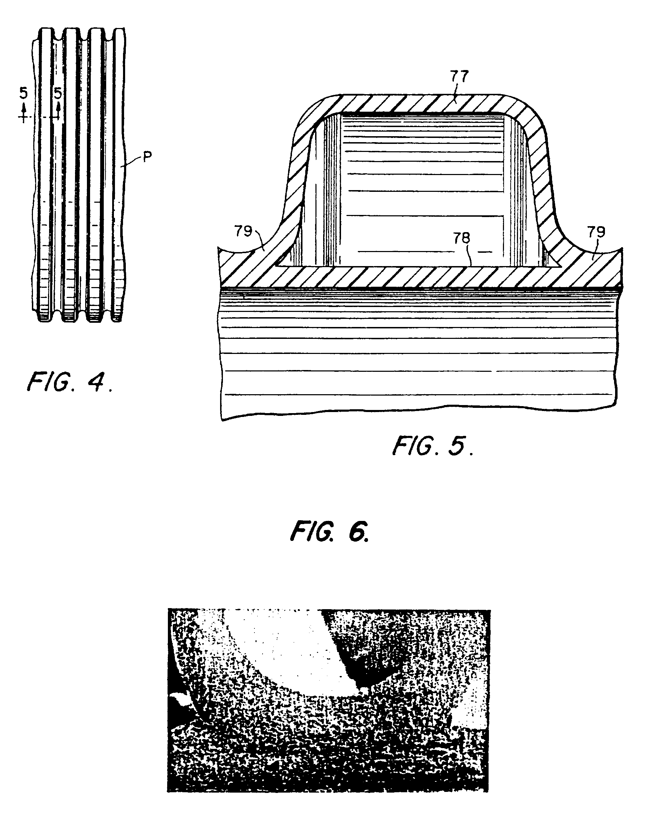

Es wurde ein konventioneller Krauss Maffei KMD 125 Doppelschraubenextruder verwendet, um etwa 12.000 ft (4000 m) Doppelwandrohr der Größe 8 in (20,3 cm) mit einem Längsschnitt gemäß Fig. 5 verwendet, wobei der Extruder mit einer Spritzdüse, einer gewellten Form, Aufblaseinrichtung und Form- und Kühldorn ausgerüstet war, wie im Hinblick auf Fig. 1 bis 3D beschrieben, sowie mit konventionellen Einrichtungen zur kontinuierlichen Bestimmung der Zylindertemperaturen, der Formtemperaturen, der Schmelzentemperaturen, der Kühltemperatur und des Kopfpreßdrucks. Der Ansatz wurde in einem Hochleitungsmischer zu einer gleichmäßigen frei fließenden Trockenmischung in folgender Zusammensetzung vorbereitet:

| Bestandteil | Gewichtsprozent |
|---|---|
| Polyvinylchlorid | 90,580 |
| Kalziumkarbonat | 2,717 |
| Acrylpolymerverfahrenshilfe | 1,812 |
| Chloriertes Polyäthylen | 1,359 |
| Paraffinwachs | 1,268 |
| Titandioxid | 0,906 |
| Kalziumstearat | 0,453 |
| Rußpigment | 0,362 |
| Antimonstabilisator | 0,362 |
| Polyäthylenwachs | 0,181 |
| | 100,000 |

Das Polyvinylchlorid war ein Homopolymer mit einem mittleren Molekulargewicht, das unter dem Zeichen 225PG durch Tenneco Polymers, Inc., Houston, Texas, USA, vertrieben wird und eine relative Viskosität (1 Gewichtsprozent in Zyklohexan bei 25° C) von 2,20, eine innere Viskosität von 0,91 (0,2 g/100 ml Zyklohexanon) und einen K-Wert (nach Fikentscher) von 66,5 (0,5 g/100 ml Zyklohexanon) aufweist. Die Verfahrenshilfe war ein Acrylpolymer, das unter der Bezeichnung KM-9801 durch Rohm & Haas Co., Philadelphia, Pennsylvania, USA, zu beziehen ist.

Die äußere Düsenöffnung 14 hatte eine radiale Weite von 1,62 mm und einen inneren Durchmesser von 18,28 cm. Die innere Düsenöffnung 16 hatte eine radiale Weite von 0,73 mm und einen inneren Durchmesser von 17,67 cm. Der axiale Abstand X gemäß Fig. 3B betrug zwischen den beiden Düsenöffnungen 1,97 cm, so daß das Verhältnis von X zum inneren Durchmesser der Öffnung 16 1 : 8,9 betrug. Der Antriebsmotor des Extruders wurde mit 2000 Umdrehungen angetrieben, das zu einer Schraubengeschwindigkeit von 18 Umdrehungen/Min. führte. Der Kopfdruck begann mit 4680 psi (327,6 kg/cm²) und wurde unter 4900 psi (343 kg/cm²) während des Laufes gehalten. Die Zylindertemperaturen waren folgende:

| Zone | Temperaturen |
|---|---|
| A | 220-221°C |
| B | 219-221°C |
| C | 198-199°C |
| D | 179-182°C |
| E | 171-172°C |

Die Formkörpertemperaturen, einschließlich des Ansatzflansches, wurden auf wenigstens 204° C gehalten.

Die Schmelzentemperatur wurde zwischen 192° C und 193° C gehalten und die Temperatur des extrudierten Materials an den Düsenlippen war konstant im Bereich 193,3 ± 5,56° C.

Die Extrusionsgeschwindigkeit wurde auf 1040 lbs. per hour (450 kg/h) gehalten). Der Luftdruck durch den Durchlaß 22 und die Mündung 23 betrug 6,6 - 8,1 psi (0,46 - 0,57 kg/cm²). die Temperatur des Dorns am Ende des Abstandes Z betrug 7 - 15° C.

Das fertige Rohr wies einen Querschnitt gemäß Fig. 5 auf, mit einer inneren Wanddicke von 1,02 mm, einer äußeren Wanddicke von 0,89 mm und einem radialen Abstand zwischen der inneren Fläche der inneren Wand und der äußeren Fläche der äußeren Wand von 9,15 mm. Im Schlagtestversuch gemäß dem US Standard ASTM D 2444-80 mit einem Drehmoment von 160 ft.lbs (22 mkp) erreichten 14 von 20 Proben ein Drehmoment von 80 ft.lbs. (11 mkp) mit einem 20 lb. (9,06 kg) Gewicht vom Typ B TUP. Beim Testen von externen Belastungseigenschaften durch den US Test Standard ASTM D 2412-77 wurde eine minimale Rohrsteifheit von 50 psi (3,5 kg/cm²) bei 5 % (0,4 in) Ablenkung erreicht. In Flachrucktests nach US Standard ASTM D 2412-77 wurden Proben um 60 % vom nominalen Durchmesser abgelenkt. 3,8 m Testproben wurden an den Enden unterstütztund auf 58° C gebracht, es wurde eine Hitzeverbiegung von 13,3 mm maximal beobachtet, wobei alle Proben zur Originalstreckung zurückkehrten, wenn sie zur Ausgangstemperatur abgekühlt wurden.

Fig. 6 zeigt eine elektronenmikroskopische Abtastung bei einer Vergrößerung von 20 mal eines Schnittes im rechten Winkel zu einer der Wellen des äußeren Schlauches. Obwohl der Effekt des Schneidens beobachtet werden kann, ist zu bemerken, daß keine Grenzlinie zwischen der inneren Wand und der äußeren Wand gesehen werden kann, an der, an dem inneren Rücken der Welle, die beiden Wände zusammengefügt sind.

## Patentansprüche

1. Vorrichtung zur Herstellung doppelwandiger Kunststoffrohre, insbesondere PVC-Rohre, durch fortlaufende Extrusion eines äußeren und eines inneren Schlauches aus zueinander konzentrischen Düsenöffnungen (14, 16) eines Extrusionskopfs,
bei der der aus einem einzigen Extruder gespeiste Extrusionskopf, von einem Düsenkörper (5) getragen, konzentrisch zueinander einen inneren Dorn (9), der einlaufseitig in einem konischen inneren Torpedo (6) endet, einen Separierzylinder (10), der sich einlaufseitig bis zu einem in einem konischen äußeren Torpedo (7) endenden Teiler (8) erstreckt, und einen äußeren Zylinder (12) aufweist, und
der Separierzylinder (10) durch am Teiler (8) angeordnete Befestigungsmittel am Düsenkörper befestigt ist,
so daß ein gerade in den Extrusionskopf eingeführter strangförmiger Kunststoffstrom an dem konisch auslaufenden inneren Torpedo (6) schlauchförmig umgeformt und dieser schlauchförmige Strang durch den äußeren Torpedo (7) in zwei konzentrische Kunststoffströme aufgeteilt wird,
**dadurch gekennzeichnet,**
daß der innere Dorn (9) durch, in Extrusionsrichtung gesehen, hinter dem konischen inneren Torpedo (6) angeordnete Befestigungsmittel am Teiler (8) befestigt ist,
daß der konische äußere Torpedo (7) das in Flußrichtung hintere Ende des konischen inneren Torpedos (16) umschließt,
daß sowohl der zwischen dem äußeren Zylinder (12) und dem Separierzylinder (10) gebildete äußere Ringkanal (13) als auch der zwischen dem Separierzylinder (10) und dem inneren Dorn (9) gebildete innere Ringkanal (15) stromabwärts von den genannten Befestigungsmitteln bis zu den Düsenöffnungen (14, 16) unterbrechungsfreie Fließwege bilden und
daß die innere Düsenöffnung von der äußeren Düsenöffnung, in Extrusionsrichtung gesehen, einen Abstand X im Bereich zwischen Null und nicht über 64 mm besitzt.

2. Vorrichtung nach Anspruch 1, dadurch gekennzeichnet, daß das Verhältnis des Abstandes zwischen den Düsenöffnungen zum inneren Durchmesser der äußeren Düse im Bereich 1:4 bis 1:22 beträgt.

3. Vorrichtung nach einem der Ansprüche 1 oder 2, dadurch gekennzeichnet, daß der innere Dorn (9) hohl ausgebildet ist und eine durch den Verteiler geführte erste Gasdruckleitung aufweist, die mit einer an den Extrusionskopf anschließenden Form- und Kühlanordnung verbunden ist, und daß in der Wandung des Separierzylinders (10) eine zweite Gasdruckleitung gebildet ist, durch die Gasdruck zwischen äußeren und inneren extrudierten Schlauch einleitbar ist.

4. Vorrichtung nach einem der Ansprüche 1 bis 3, dadurch gekennzeichnet, daß eine Form- und Kühlanordnung an den Extrusionskopf anschließt, die aus einem den inneren Durchmesser eines zu extrudierenden Doppelwandrohres bestimmenden Formdorn (30) und über den Umfang des Formdorns wanderenden Formhälften (21) besteht, um fortlaufend Doppelwandrohre mit gerader innen- und quergewellter Außenstruktur zu extrudieren, daß in den Innenraum des inneren Schlauches ein erster Gasdruck einblasbar ist, und daß zwischen die beiden Schläuche ein zweiter Gasdruck einblasbar ist, der größer als der erste Gasdruck ist.

5. Vorrichtung nach Anspruch 4, dadurch gekennzeichnet, daß die größte Querausdehnung der Form- und Kühlanordnung in einem Abstand von der inneren Düsenöffnung angeordnet ist, der kleiner als der Durchmesser des herzustellenden Rohres ist.

## Claims

1. Apparatus for the production of double-walled plastic pipes, particularly PVC pipes by continuous extrusion of an outer and an inner tube from concentric nozzle orifices (14, 16) of an extrusion head,
in which the extrusion head, which is carried by a nozzle body (5), is supplied by a single extruder and has concentric to one another an inner mandrel (9) which terminates on the inlet side in a conical inner torpedo (6), a separating cylinder (10) which extends on the inlet side into a divider (8) which ends in a conical outer torpedo (7), and an outer cylinder (12), and
the separating cylinder (10) is fixed to the nozzle body by fixing means arranged on the divider (8),
so that a strand-like plastics flow which has just been introduced into the extrusion head is converted in a tubular manner at the conically terminating inner torpedo (6) and this tubular strand is divided by the outer torpedo (7) into two concentric plastic flows,
characterised in that,
the inner mandrel (9) is fixed to the divider (8) by fixing means which are arranged behind the conical inner torpedo (6) when seen from the extrusion direction.
the conical outer torpedo (7) encloses the rear end of the conical inner torpedo (16) in the flow direction,
both the outer annular channel (13) formed between the outer cylinder (12) and the separating cylinder (10) as well as the inner annular channel (15) formed between the separating cylinder (10) and the inner mandrel (9) form uninterrupted passages downstream from the specified fixing means until the nozzle openings (14, 16) and
the inner nozzle orifice is at a distance X which is in the range between zero and not more than 64 mm from the outer nozzle orifice in the extrusion direction.

2. Apparatus according to Claim 1, characterized in that the ratio of the spacing between the nozzle orifices to the inner diameter of the outer nozzle is in the range 1:4 to 1:22.

3. Apparatus according to one of the Claims 1 or 2, characterized in that the inner mandrel (9) is hollow and has a first gas pressure passed through the distributor which is connected to a shaping and cooling means connected to the extrusion head and that a second gas pressure line is formed in the wall of the separating cylinder (10) through which the gas pressure can be introduced between the outer and inner extruded tube.

4. Apparatus according to one of the Claims 1 to 3, characterized in that a shaping and cooling means is connected to the extrusion head consisting of a shaping mandrel (30) determining the internal diameter of a double-walled pipe to be extruded and a mould halves (21) migrating over the circumference of the shaping mandrel, in order to continuously extrude double-walled pipes with straight inner and transversely corrugated outer structure, that a first gas pressure can be blown into the interior of the inner tube and that between the tubes can be blown a second gas pressure which is greater than the first gas pressure.

5. Apparatus according to Claim 4, characterized in that greatest transverse extension of the shaping and cooling means is arranged at a distance from the inner nozzle orifice which is smaller than the diameter of the pipe to be produced.

## Revendications

1. Dispositif pour la fabrication de tubes en matière plastique à double paroi, en particulier en PVC, par extrusion continue d'un tuyau extérieur et d'un tuyau intérieur à partir d'ouvertures de filières concentriques (14, 16) d'une tête d'extrusion,
dans lequel la tête d'extrusion, alimentée à partir d'une extrudeuse unique et portée par un corps de filière (5), comprend, disposés concentriquement, un mandrin intérieur (9) qui aboutit, côté entrée, dans une torpille intérieure conique (6), un cylindre séparateur (10) qui s'étend, côté entrée, jusqu'à un séparateur (8) aboutissant dans une torpille extérieure conique (7), et un cylindre extérieur (12), et
le cylindre séparateur (10) est fixé au corps de filière par des moyens de fixation disposés au niveau du séparateur (8),
de sorte qu'un courant de matière plastique en forme de boudin introduit en ligne droite dans la tête d'extrusion est déformé en forme de tuyau au niveau de la torpille intérieure s'effilant en cône (6), et ce boudin en forme de tuyau est divisé par la torpille extérieure (7) en deux courants concentriques,
caractérisé
en ce que le mandrin intérieur (9) est fixé au séparateur (8) par des moyens de fixation disposés derrière la torpille intérieure conique (6), dans le sens d'extrusion,
en ce que la torpille extérieure conique (7) entoure l'extrémité arrière, dans le sens d'écoulement, de la torpille intérieure conique (6),
en ce que le canal annulaire extérieur (13) défini entre le cylindre extérieur (12) et le cylindre séparateur (10), et le canal annulaire intérieur (15) défini entre le cylindre séparateur (10) et le mandrin intérieur (9) forment tous les deux, en aval desdits moyens de fixation, des trajectoires d'écoulement continues jusqu'aux ouvertures de filières (14, 16), et
en ce que l'ouverture de fitière intérieure présente par rapport à l'ouverture de fitière extérieure, dans le sens d'extrusion, un écartement X situé entre zéro et 64 mm maximum.

2. Dispositif selon la revendication 1, caractérisé en ce que le rapport de l'écartement entre les ouvertures de fitières au diamètre intérieur de la fitière extérieure se situe dans la plage de 1:4 à 1:22.

3. Dispositif selon l'une des revendications 1 ou 2, caractérisé en ce que le mandrin intérieur (9) est creux et comporte une première conduite sous pression gazeuse qui traverse le répartiteur et qui est reliée à un dispositif de formage et de refroidissement faisant suite à ta tête d'extrusion, et en ce qu'une seconde conduite sous pression gazeuse est formée dans la paroi du cylindre séparateur (10), par laquelle la pression gazeuse peut être introduite entre tes tuyaux extrudés extérieur et intérieur.

4. Dispositif selon l'une des revendications 1 à 3, caractérisé en ce qu'il est prévu, à la suite de la tête d'extrusion, un dispositif de formage et de refroidissement qui se compose d'un mandrin de formage (30) déterminant le diamètre intérieur d'un tube à double paroi à extruder, et de demi-moules (21) mobiles sur le mandrin de formage, afin d'extruder en continu des tubes à double paroi à structure intérieure droite et à structure extérieure ondulée transversalement, en ce qu'une première pression gazeuse peut être injectée à l'intérieur du tuyau intérieur, et en ce qu'une seconde pression gazeuse, supérieure à la première, peut être injectée entre les deux tuyaux.

5. Dispositif selon la revendication 4, caractérisé en ce que l'extension transversale maximale du dispositif de formage et de refroidissement se trouve à une distance de l'ouverture de fitière intérieure qui est inférieure au diamètre du tube à fabriquer.
